# EUROPÄISCHE PATENTANMELDUNG

(11) **EP 1 616 739 A2**
(43) Veröffentlichungstag der Anmeldung: **18.01.2006**
(21) Anmeldenummer: 05013744.7
(22) Anmeldetag: 25.06.2005
(51) Int. Cl.: B60J 7/12

(54) **Verdeckstoff**

(30) Priorität: 12.07.2004 DE 102004033788
(71) Anmelder: Wilhelm Karmann GmbH, 49084 Osnabrück (DE)
(72) Erfinder: Baule, Rolf-Peter, 33775 Versmold (DE)

(57) **Zusammenfassung**

Die Erfindung betrifft einen Verdeckstoff zur wasserdichten Bespannung von insbesondere Kraftfahrzeugen wie Cabriolets mit zumindest einer Verdeckschicht (2), wobei die zumindest eine Verdeckschicht (2) als Verbundverdeckschicht ausgebildet ist, die wenigstens teilweise aus einem mit elastischen Hohlkörpern (5) angereicherten Matrixmaterial (4) besteht.

## Beschreibung

Die vorliegende Erfindung betrifft einen Verdeckstoff zur Bespannung von insbesondere Kraftfahrzeugen wie Cabriolets mit zumindest einer Verdeckschicht.

Moderne Verdeckstoffe, die insbesondere für Cabriolet-Verdecke, aber auch für Roadster, Geländewagen, Vorzelte oder dgl. verwendet werden, müssen immer höheren Anforderungen bezüglich ihrer Materialeigenschaften gerecht werden. Gerade die bei einer Verpackung des Verdeckstoffes, bzw. einer Betätigung des zugehörigen Verdeckes auftretenden Belastungen führen langfristig zu einer Schädigung des Verdeckstoffes, der im Lauf der Zeit verstärkt die vorgegebene, gewünschte Form und seine Elastizität verliert.

Der vorliegenden Erfindung liegt die Aufgabe zugrunde, einen Verdeckstoff bzw. ein Verdeck nach dem Stand der Technik zu verbessern.

Die Aufgabe wird gelöst durch einen Verdeckstoff nach dem Oberbegriff des Anspruchs 1, der sich durch eine als Verbundverdeckschicht ausgebildete Verdeckschicht auszeichnet, die wenigstens teilweise aus einem mit elastischen Hohlkörpern angereicherten Matrixmaterial besteht. Insbesondere die hervorragenden Biegeeigenschaften eines solchen Verdeckstoffes sind auf die Verwendung des mit elastischen Hohlkörpern angereicherten Matrixmaterials zurückzuführen. Die im Bereich einer Knick- oder Biegestelle auf den Verdeckstoff einwirkenden Kräfte werden auf die im Matrixmaterial befindlichen Hohlkörper übertragen und führen zu deren Verformung. Gleichzeitig werden die auftretenden Kräfte mit Hilfe der Hohlkörper gut von der Knickstelle weg verteilt. Bei der Wiederherstellung des ursprünglichen Zustands geben die Hohlkörper die Verformungsenergie wieder ab, gelangen in ihre ursprüngliche Form und sorgen damit für eine deutlich bessere Wiederherstellung des vorherigen Zustands als bei den im Stand der Technik bekannten Verdeckstoffen.

Vorteilhafterweise ist die erfindungsgemäße Verbundverdeckschicht auf einer Trägerschicht aufgebracht, die entweder direkt oder mittels einer weiteren Klebeschicht mit der Verbundverdeckschicht verbunden ist. Der hierdurch erzeugte Verdeckstoff wird anschließend in einfacher und handlicher Weise für die Weiterverarbeitung in einem Verdeck verwendet. Typischerweise bestehen solche Trägerschichten aus einem Gewebe, das insbesondere aus Polyester und Polyacrylnitril gebildete Fäden aufweist. Damit können die bereits für Verdeckstoffe bekannten Trägerschichten, beispielsweise das Obergewebe eines bekannten Cabriolet-Verdeckstoffes, weiterverwendet werden.

Ein weiteres Ausführungsbeispiel der Erfindung zeichnet sich neben der Verbundverdeckschicht durch eine bedruckbare und insbesondere transparente und aliphatische Verdeckschicht aus. Dieses dient der Abwehr von Witterungseinflüssen auf die Verbundverdeckschicht und führt desweiteren zu einer beliebig gestaltbaren Optik des Verdeckstoffes. Es liegt daher im Rahmen der Erfindung, ein Cabriolet-Verdeck, das sich durch einen solchen erfindungsgemäßen Verdeckstoff auszeichnet, mit einer auf Kundenwunsch hin bedruckbaren Oberfläche auszustatten.

Erfindungsgemäß kann die Verbundverdeckschicht ebenfalls aus einem (mit Hohlkörpern angereicherten) Matrixmaterial bestehen, welches eine die Verwendung eines Trägermaterial überflüssig machende Rißbeständigkeit aufweist und darüber hinaus wasserdicht ist. Dafür ist das Matrixmaterial vorteilhafterweise aus einem geschlossenporigen Kunststoff hergestellt. Dieser erfindungsgemäße Verbundstoff entspricht damit einem einlagigen Verdeckstoff, der die weitere Verarbeitung vereinfacht.

Weitere Vorteile und Einzelheiten der Erfindung ergeben sich aus den nachfolgend beschriebenen schematischen Zeichnungen, die Ausführungsbeispiele der Erfindung darstellen. Es zeigt:
- Figur 1: eine Prinzipskizze eines erfindungsgemäßen Verdeckstoffes,
- Figur 2: einen Schnitt durch den Gegenstand nach Figur 1 in einer Explosionsdarstellung,

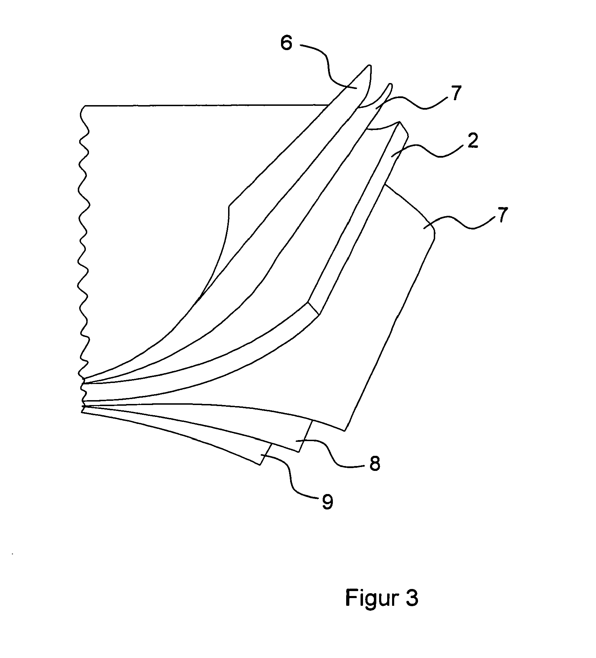

- Figur 3: ein weiteres Ausführungsbeispiel der Erfindung in aufgefächerter Darstellung.

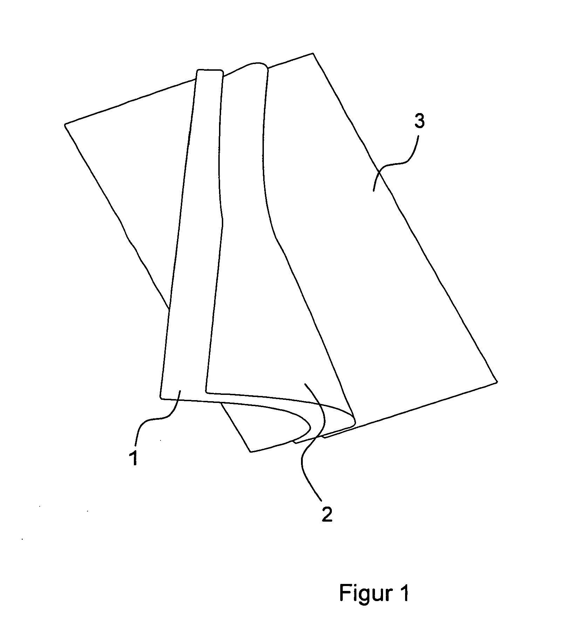

Der in Figur 1 dargestellte erfindungsgemäße Verdeckstoff umfaßt eine zur Abwehr von Witterungseinflüssen ausgebildete Verdeckschicht 1, die eine aus einem mit Hohlkörpern angereicherten Matrixmaterial bestehende Verbundverdeckschicht 2 bedeckt. Beide Verdeckschichten 1 und 2 befinden sich auf einer weiteren Verdeckschicht 3, die beispielsweise ein Trägermaterial für die Verbundverdeckschicht 2 darstellt. Aus Gründen der Übersichtlichkeit sind die im Normalfall direkt aufeinanderliegenden Schichten teilweise aufgeklappt dargestellt, insbesondere um auch die gute Biegsamkeit des erfindungsgemäßen Verdeckstoffes zu verdeutlichen.

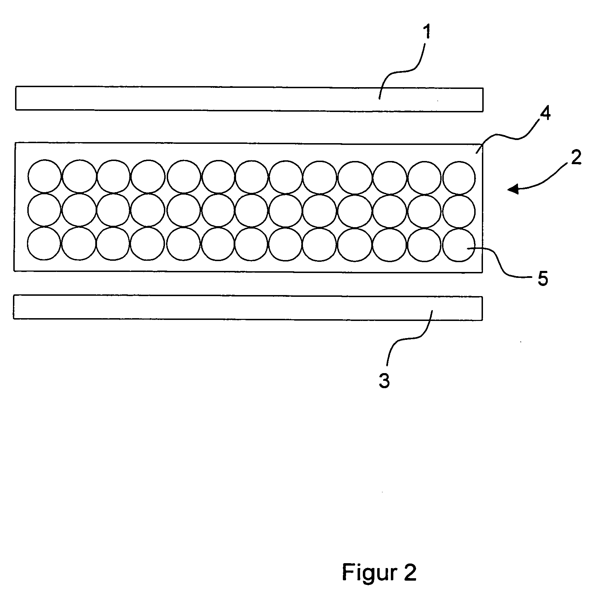

Die Figur 2 zeigt schematisch die in Figur 1 bereits gezeigten drei Schichten in einer Explosionsdarstellung, wobei insbesondere das Aussehen der Verbundverdeckschicht 2 illustriert ist. Diese besteht aus einem Matrixmaterial 4, das bevorzugt aus Polyurethan (PU) besteht. Denkbar sind allerdings auch Matrixmaterialien 4 aus PU-Schaum oder Polyvenylchlorid (PVC). Auch verschiedene Mischungen dieser Matrixmaterialien 4 können als Matrixmaterial 4 verwendet werden. Wesentlicher Bestandteil des Matrixmaterials 4 sind vorteilhafterweise rund ausgebildete Hohlkörper 5, deren Wandmaterial aus Acryl-Nitril-Copolymeren besteht.

Solcher Art expandierte thermoplastische Hohlkörper führen zu besonders guten Elastizitätseigenschaften des Verdeckstoffes. Hierbei hat es sich gezeigt, daß der Anteil von als Hohlkugeln ausgebildete Hohlkörper 5 zu Matrixmaterial 4 vorzugsweise in einem Bereich zwischen 1 Gew.-% bis 20 Gew.-% liegt, besser bei 2 Gew.-% bis 5 Gew.-% und besonders bevorzugt bei ungefähr 4 Gew.-% liegt. Das spezifische Gewicht der expandierten thermoplastischen Hohlkörper 5 beträgt ungefähr 0,13 g/cm3. Bei diesem Gewicht können die vorteilhafterweise runden Hohlkörper 5 mit einem Druck von bis zu 140 kg/cm2 belastet werden ohne zu brechen. Es können allerdings auch Hohlkörper anderer Dichten verwendet werden, um die Biege- bzw. Elastizitätseigenschaften des Verdeckstoffes zu variieren.

Neben auch weiterhin denkbaren unterschiedlichen Anteilen von Hohlkörpern 5 zu Matrixmaterial 2, die über die genannten Anteilsbereiche hinausgehen und damit zu unterschiedlichen, den Anwendungsgebieten angepaßten Eigenschaften des Verdeckstoffes führen, können die Elastizitätseigenschaften des Verdeckstoffes insbesondere durch die Füllungen der Hohlkörper mit verschiedenen Gasen bei auch unterschiedlichen Drücken weiterhin variiert und den spezifischen Anwendungen des Verdeckstoffes angepaßt werden.

Ein weiterer erfindungsgemäßer Verdeckstoff weist eine wasserundurchlässige und witterungsbeständige obere Verdeckschicht 6 auf, welche ähnlich der Verdeckschicht 1 ausgebildet sein kann. Alternativ dazu kann die weitere Verdeckschicht 6 auch in der Art eines herkömmlichen Obergewebes für einen Verdeckstoff eines Cabriolets ausgebildet sein. Eine Klebeschicht 7 verbindet diese weitere Verdeckschicht 6 mit der Verbundverdeckschicht 2, die die oben beschriebenen Eigenschaften besitzt. Unterhalb der Verbundverdeckschicht 2 befindet sich eine weitere Klebeschicht 7, die die Verbundverdeckschicht 2 mit einer aus Trägermaterial bestehenden weiteren Verbundschicht 8 verbindet. Nach unten hin wird diese Verdeckschicht 8 durch eine Abschlußschicht 9 begrenzt, die insbesondere der Wärme- und/oder Schalldämmung dient.

Der dergestalt ausgebildete Verdeckstoff eignet sich hervorragend für den Einsatz in Cabriolet-Verdecken und zeichnet sich durch besonders gute Biegeeigenschaften aus. So liegt die Biegefestigkeit des Verdeckstoffes oberhalb von 0,3 N und weist unter einer 125 N Last je nach verwendetem Trägermaterial einer Dehnung zwischen 1,0 und 10,0 % gemäß DIN 53360 auf. Trotz dieser guten Werte behält der erfindungsgemäße Verdeckstoff auch nach vielfachen und vielfältigen Belastungen seine gewünschte Form bei.

## Patentansprüche

1. Verdeckstoff zur wasserdichten Bespannung von insbesondere Kraftfahrzeugen wie Cabriolets mit zumindest einer Verdeckschicht (2), **dadurch gekennzeichnet, daß** die zumindest eine Verdeckschicht (2) als Verbundverdeckschicht (2) ausgebildet ist, die wenigstens teilweise aus einem mit elastischen Hohlkörpern (5) angereicherten Matrixmaterial (4) besteht.

2. Verdeckstoff nach Anspruch 1, **dadurch gekennzeichnet, daß** das Matrixmaterial (4) zumindest teilweise aus Polyurethan besteht.

3. Verdeckstoff nach einem der Ansprüche 1 oder 2, **dadurch gekennzeichnet, daß** das Matrixmaterial (4) zumindest teilweise aus Polyurethanschaum und/oder PVC besteht.

4. Verdeckstoff nach einem der Ansprüche 1 bis 3, **dadurch gekennzeichnet, daß** die Hohlkörper (5) zumindest teilweise rund sind.

5. Verdeckstoff nach einem der Ansprüche 1 bis 4, **dadurch gekennzeichnet, daß** die Hohlkörper (5) gasgefüllt sind.

6. Verdeckstoff nach einem der Ansprüche 1 bis 5, **dadurch gekennzeichnet, daß** die Hohlkörper (5) expandierte thermoplastische Hohlkörper sind.

7. Verdeckstoff nach Anspruch 6, **dadurch gekennzeichnet, daß** das Wandmaterial der Hohlkörper (5) aus Acryl-Nitril-Copolymeren besteht.

8. Verdeckstoff nach einem der Ansprüche 1 bis 7 mit zumindest einer weiteren Verdeckschicht (3,8), **dadurch gekennzeichnet, daß** die Verbundverdeckschicht (2) auf einer Trägerschicht (3, 8) aufgebracht ist.

9. Verdeckstoff nach Anspruch 8, **dadurch gekennzeichnet, daß** die Trägerschicht (3, 8) mit der Verbundverdeckschicht (2) mittels einer Klebeschicht (7) verbunden ist.

10. Verdeckstoff nach einem der Ansprüche 8 oder 9, **dadurch gekennzeichnet, daß** die Trägerschicht (3, 8) aus einem Gewebe besteht.

11. Verdeckstoff nach Anspruch 10, **dadurch gekennzeichnet, daß** das Gewebe aus Polyester und Polyacrylnitril gebildete Fäden aufweist.

12. Verdeckstoff nach einem der Ansprüche 1 bis 11 mit zumindest einer weiteren Verdeckschicht (6), **dadurch gekennzeichnet, daß** die weitere, wasserundurchlässige Verdeckschicht (6) direkt oder mit Hilfe eines Klebers auf die Verbundverdeckschicht (2) aufgebracht ist.

13. Verdeckstoff nach einem der Ansprüche 1 bis 12, **dadurch gekennzeichnet, daß** eine der Verdeckschichten (6) bedruckbar ist.

14. Verdeckstoff nach einem der Ansprüche 1 bis 13, **dadurch gekennzeichnet, daß** zumindest eine der Verdeckschichten (1, 6) transparent ist.

15. Verdeckstoff nach Anspruch 14, **dadurch gekennzeichnet, daß** die transparente Verdeckschicht (1, 6) aliphatisch ausgebildet ist.

16. Verdeckstoff nach einem der Ansprüche 1 bis 15 mit zumindest einer weiteren Verdeckschicht (9), **dadurch gekennzeichnet, daß** die weitere Verdeckschicht (9) als Dämmschicht zur Wärme- und/oder Schalldämmung ausgebildet ist.

17. Cabriolet-Verdeck, **gekennzeichnet durch** einen Verdeckstoff nach einem der vorherigen Ansprüche.
